Europäisches Patentamt

(19) **European Patent Office**

**Office européen des brevets**

(11) Publication number: **0 050 491**
**A1**

# (12) EUROPEAN PATENT APPLICATION

(21) Application number: **81304832.9**

(22) Date of filing: **16.10.81**

(51) Int. Cl.³: **G 03 B 15/03, G 03 B 17/17**

(30) Priority: **21.10.80 GB 8033966**

(43) Date of publication of application: **28.04.82**
**Bulletin 82/17**

(84) Designated Contracting States: **AT BE CH DE FR GB IT LI LU NL SE**

(71) Applicant: **LEIGH INTERESTS LIMITED, Lindon Road Brownhills, Walsall West Midlands WS8 7BB (GB)**

(72) Inventor: **Turpin, Gerald Leslie, Frith Hill Farm Frith Hill, Great Missenden Buckinghamshire (GB)**

(74) Representative: **Daley, Michael John et al, F.J. CLEVELAND & COMPANY 40/43 Chancery Lane, London, W.C2A 1JQ (GB)**

(54) Improvements in or relating to camera supplemental lighting devices and to cameras.

(57) A camera supplemental lighting device comprises a housing 10 for interposing between a camera body and a lens system. The upper part of the housing contains a light source 18 and a filter tray 26. A reflector 17 directs from the source 18 through the filter tray 26 into the camera.

EP 0 050 491 A1

0050491

"IMPROVEMENTS IN OR RELATING TO CAMERA
SUPPLEMENTAL LIGHTING DEVICES AND TO
CAMERAS"

This invention relates to camera supplemental lighting devices and to cameras.

When a video or cinematograph camera is used to record a scene in which the level of lighting can alter abruptly it is difficult to adequately compensate for the changes in lighting level by varying the aperture of the camera. A particular example of when this difficulty arises occurrs in recording a scene in a sports stadium one side of which is in bright sunlight and the other side of which is in shadow. In following a race around a track in the stadium, the camera has to be adjusted very rapidly as the camera follows the event around the track, very rapid adjustments have to be made to compensate as the camera moves from a brightly lit scene to a scene in shadow. In practice it is almost impossible to compensate adequately and so the film or video record particularly of the parts shot in shadow is invariably poor. The same problem arises when using a still camera for recording a series of scenes where the lighting level varies substantially from scene to scene.

This invention provides a camera lighting device comprising a housing having means on one side thereof to mount the housing on a camera body, means on the opposite side thereof to mount a lens system on the housing, a light path through the housing for light from the lens to the camera, a substantially transparent reflector mounted in the light path at an angle to the light path and a light source in the housing to one side of the light path to direct light on to the reflector and thence into the camera body to supplement the light received from the lens system.

The supplemental lighting device can be used to supply additional light to the camera as the camera moves into a scene in shadow or when the lighting of the scene being recorded has dropped sharply for any other reason to enhance the latent image being recorded on film or video tape. By setting the supplemental light at an appropriate level to compensate for the reduction in the light value of the scene being recorded in shadow as compared with the sunlit scene, a substantial improvement in the image as recorded on the film of the scene is achieved.

Since the device is located between the lens system and the camera body and there is no lens between the device and the film or video plane of the camera, the light source of the device is not itself focussed on to the film or video plane but merely provides a general level of illumination across the film plane.

Means may be provided in the housing for mounting a filter or filters between the lens and the reflector and out of said light path through the housing to colour the light to be directed by the reflector from the lamp into the camera body. This facility enables the colour of the scene being photographed to be corrected by the supplemental light from the device to provide a better balance in the colouring of the image being photographed. For example outdoor scenes being photographed on a brightly sunlit day under blue sky are normally over-blue particularly in the shadow areas and this can be compensated for by appropriate colouring of the supplemental light added.

The invention also provides a camera having a lens, a shutter mechanism, a film plane and a supplemental lighting device comprising a substantially transparent reflector mounted at an angle in the light path between the lens system and film plane and a supplemental light source disposed to one side of the reflector out of said light path to direct additional light on to the reflector and thence on to the film plane to supplement the light received through the lens system.

The following is a description of one specific embodiment of the invention, reference being made to the accompanying drawings in which:

Figure 1 is a diagrammatic view of a camera supplemental lighting device;

Figure 2 is a section taken through the device illustrated in Figure 1; and

Figure 3 illustrates the device as applied to a camera.

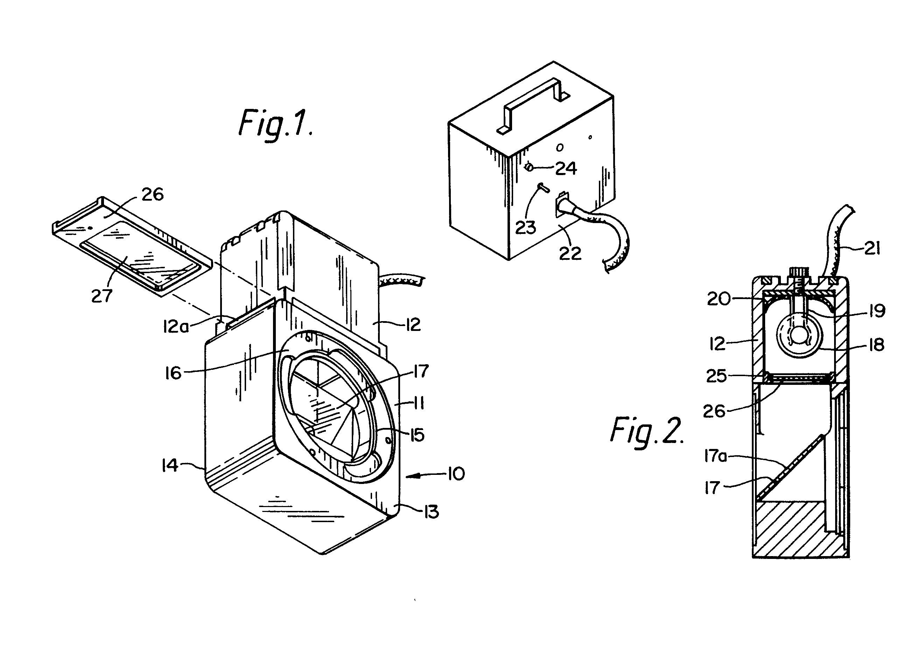

Referring firstly to Figures 1 and 2 of the drawings, there is shown a camera supplemental lighting device comprising a housing indicated generally at 10 having a lower part 11 and an upper part 12. The lower part 11 of the housing has a front wall 13 and a back wall 14 and is generally square in transverse cross-section.

The front wall 13 of the housing is formed with a large circular aperture 15 and the front face of the wall around the aperture is formed with a recess 16 in which an internally screw threaded mounting ring (not shown) is fixed to receive the screw threaded end of a lens system. The rear wall 14 of the housing is formed with a similar aperture co-axial with the front wall aperture and encircled by a screw threaded mounting ring for fixing the housing 10 to the front of a camera body.

The apertures in the front and rear walls of the upper part of the housing provide a light path between a lens system and the camera body through the housing as described later. Within the housing between the front and rear walls a transparent reflector 17 is mounted at an angle of forty-five degrees to the axis of the apertures in the front and rear walls of the housing. The reflector 16 is formed from glass and may be lightly silvered on one side to act as a reflector and at the same time to transmit light received from the lens system at the front of the housing into the camera body at the rear of the housing substantially un-impaired. The reflector may, alternatively, be formed from a transparent plastics. In the upper part of the housing 12 a lamp 18 preferably of the tungsten-halogen type is mounted on spaced pairs of contacts 19. A reflector 20 is mounted in the bottom of the upper part of the housing 12 so that substantially all the light from the lamp 18 is reflected upwardly into the

0050491

lower part of the housing. The lamp 18 is powered
through a cable 21 connected to a power pack 22 containing
conventional re-chargeable batteries and controlled by
an on/off switch 23. The power output from the pack
22 can be varied by a control 24 to vary the power supply
to the lamp 18 and thereby the illumination provided
by the lamp.

At the bottom of the upper part of the housing 12
a slide carrier 25 is mounted to receive a filter tray
26 which can be slid into the housing through a slot
12a in one side of the housing. The filter tray 26
carries a filter or filter pack 27 of a predetermined
colour to colour the light emitted by the lamp 18
in any particular required way. Light from the lamp 18
at a power determined by the power pack control passes
up through the filter 27 and is reflected from the
back face 17a of the reflector 17 into the camera body
to supplement light from the scene being photographed
through the lens system which passes directly through
the reflector 17 and into the camera body. By
adjusting the level of the light from the lamp, the
latent image recorded on the film can be enhanced without
impairing the sharpness and contrast of the image
of the scene being photographed. By selection of a
suitable filter or filter pack 27, the colouring of
the image can be un-changed or can be corrected or varied in any way required.

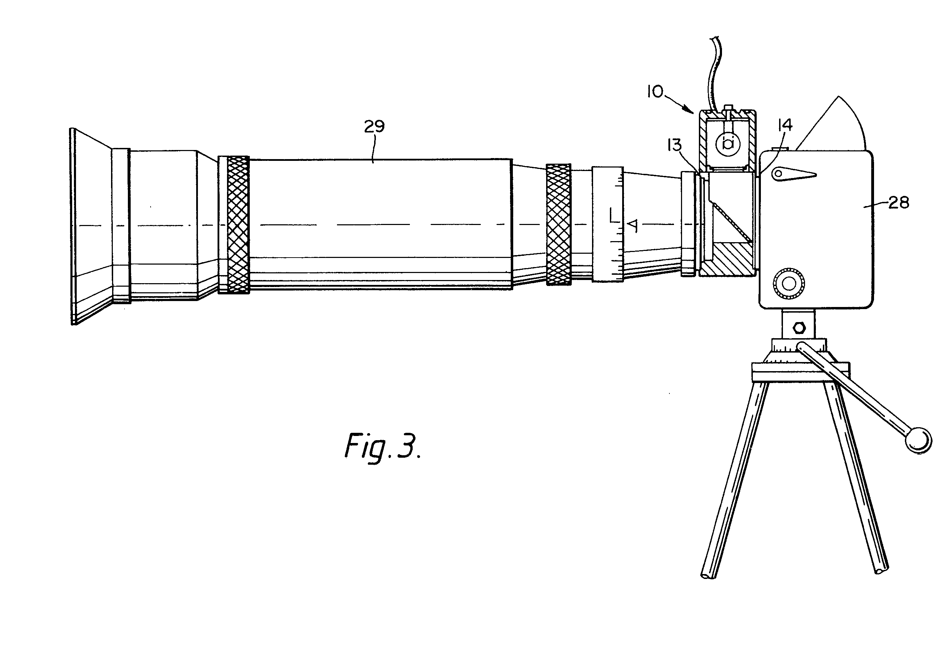

Reference is now made to Figure 3 of the drawings which shows the application of the device to a camera. The camera is indicated at 28 and a telephoto lens system for the camera is indicated at 29. It will be seen that the telephoto lens system 29 is mounted on the front of the device the device taking the place of the normal "distance" tube at the end of the lens system and the camera 28 is mounted at the rear of the device. The depth of the device that is between the front and rear walls thereof is such that the telephoto lens system 29 is correctly focussed in relation to the film plane of the camera.

The device is equally applicable to other forms of camera including conventional reflex cameras and is equally applicable to film and video cameras. The device can be used both with telephoto and conventional lenses provided that the lens can focus correctly to the film plane of the camera with the device in position. The device could also be made as part of the lens of the camera or part of the camera body in which case the housing of the device would be built as part of the camera body. The device can also be used in conjunction with a camera using a bellows system with the device
located between the bellows and camera lens.  Such
arrangements can be used in normal photography or for
re-photographing previously exposed transparencies
or positives for controlling the contrast in the
reproduced negative.

0050491

CLAIMS:

1. A camera supplemental lighting device comprising a housing having means on one side thereof to mount the housing on a camera body, means on the opposite side thereof to mount a lens system on the housing, a light path through the housing for light from the lens to the camera, a substantially transparent reflector mounted in the light path at an angle to the light path and a light source in the housing to one side of the light path to direct light on to the reflector and thence into the camera body to supplement the light received from the lens system.

2. A device as claimed in claim 1 wherein the light source comprises a lamp and an adjustable power source for the lamp for varying the illumination of the lamp and thereby the additional light directed into the camera body from the lamp.

3. A device as claimed in claim 1 or claim 2 wherein means are provided in the housing for mounting a filter or filters between the lamp and the reflector and out of said light path through the housing to colour the light to be directed by the reflector from the lamp into the camera body.

4.  A device as claimed in claim 3 wherein a slide is provided on which one or more filters are mounted for colouring the light from the lamp in a required way and a slideway is provided in the housing for supporting the filter in the slide in the light path between the lamp and reflector and out of said light path through the housing so that light directed into the camera from the lamp by the reflector is coloured by the filter.

5. A device as claimed in any of the preceding claims wherein the refelctor comprises a flat transparent glass or plastics sheet lightly silvered on one side thereof to cause that face of the sheet to act as a reflector without substantially reducing the transmission of light directly through the sheet.

6. A device as claimed in any of the preceding claims wherein the housing has circular apertures on opposite sides thereof for the passage of light between the lens and camera body through the housing each aperture being encircled by means for attachment of the housing to the camera body and lens respectively.

7. A device as claimed in claim 6 wherein the apertures have encircling bayonet fitting mountings for attachment to the camera body and lens system respectively.

8. A device as claimed in claim 6 wherein the apertures have encircling screw threads for screw attachment to the camera body and lens system respectively.

9. A device as claimed in any of the preceding claims in combination with a telephoto lens for mounting on a camera body.

10. A camera having a lens, a shutter mechanism, a film plane and a supplemental lighting device comprising a substantially transparent reflector mounted at an angle in the light path between the lens system and film plane and a supplemental light source disposed to one side of the reflector out of said light path to direct additional light on to the reflector and thence on to the film plane to supplement the light received through the lens system.

11. A camera as claimed in claim 10 wherein the light source comprises a lamp and variable power source for adjusting the level of illumination of the lamp.

12. A camera as claimed in claim 10 or 11 wherein means are provided for supporting a filter in the light path between the lamp and reflector and out of the light path between the lens and film plane to colour the light from the lamp to be directed by the reflector on to the film plane.

13. A camera as claimed in claim 12 wherein a slide is provided having one or more filters thereon and the device includes a slideway for supporting the filter in the light path between the lamp and reflector but out of the light path between the lens and film plane.

14. A camera as claimed in any of claims 10 to 13 wherein the lens comprises a telephoto lens.

15. A camera as claimed in any of claims 10 to 14 wherein the device includes a housing detachably mounted on the camera body and on which the lens is detachably mounted, the housing containing the reflector and light source.

16. A camera as claimed in any of claims 10 to 15 wherein the camera is provided with a bellows device between the lens and camera body and the supplemental lighting device is located between the bellows device and the lens.

0050491

Fig.1.

Fig.2.

Fig. 3.

| Category | Citation of document with indication, where appropriate, of relevant passages | Relevant to claim |
|---|---|---|
| | US - A - 4 021 831 (BERCHER)<br>* Fig. 1-4; claims * | 1,2,3,<br>5,6,8,<br>10,11,<br>12,15,<br>16 |
| | US - A - 3 765 754 (WINKLER)<br>* Fig.; abstract; claims * | 1,5,9,<br>10,14 |
| | US - A - 3 928 863 (STEWART)<br>* Fig. 3; abstract; claims * | 1,5,10 |
| | US - A - 2 387 881 (CARLSON)<br>* Fig. 1-5; page 1, column 1, lines 1-6; claims * | 1,2,5,<br>10,11,<br>12 |
| | GB - A - 873 826 (AGFA)<br>* Fig. 1; page 1, line 92 * | 1,2,3,<br>5,6,10<br>11,12,<br>15 |
| A | US - A - 4 122 333 (CROUSE)<br>* Fig. 2-4; claims; fig. 16 * | 1,6,7,<br>10,15 |

**DOCUMENTS CONSIDERED TO BE RELEVANT**

**CLASSIFICATION OF THE APPLICATION (Int. Cl.³)**

G 03 B 15/03
G 03 B 17/17

**TECHNICAL FIELDS SEARCHED (Int. Cl.³)**

G 03 B 15/00
G 03 B 17/00
G 03 B 19/00
G 03 B 27/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| VIENNA | 27-01-1982 | KRAL |

EPO Form 1503.1  06.78